# EUROPÄISCHE PATENTSCHRIFT

(11) **EP 1 019 240 B1**
(45) Veröffentlichungstag und Bekanntmachung des Hinweises auf die Patenterteilung: **12.02.2003**
(21) Anmeldenummer: 98951182.9
(22) Anmeldetag: 20.08.1998
(51) Int. Cl.: B29C 65/20, B29C 65/18, B29C 65/22, B65B 9/20

(54) **SCHLAUCHFORMVORRICHTUNG IN EINER SCHLAUCHBEUTELMASCHINE**
TUBULAR DEVICE IN A BAGGING MACHINE
DISPOSITIF TUBULAIRE DANS UNE ENSACHEUSE VERTICALE

(30) Priorität: 30.09.1997 DE 19743158
(43) Veröffentlichungstag der Anmeldung: 19.07.2000
(73) Patentinhaber: ROBERT BOSCH GMBH, 70442 Stuttgart (DE)
(72) Erfinder: DOMKE, Klaus, D-71254 Ditzingen (DE); STOTKIEWITZ, Herbert, D-74321 Bietigheim-Bissingen (DE); BLOCH, Wolfgang, D-75417 Mühlacker (DE); KURZ, Frank, D-72124 Pliezhausen (DE); LUTZ, Alexander, D-75387 Neubulach (DE); SCHAEFER, Hans, D-70794 Filderstadt (DE); RUMES, Helmut, D-70437 Stuttgart (DE)
(86) Internationale Anmeldenummer: DE9802439
(87) Internationale Veröffentlichungsnummer: WO99016609

(56) Entgegenhaltungen:
- DE-A- 1 914 960
- DE-B- 1 215 351
- DE-B- 2 129 970
- DE-U- 7 604 204
- FR-A- 1 265 312
- FR-A- 2 092 298
- FR-A- 2 356 493
- GB-A- 754 936
- GB-A- 882 740
- US-A- 2 953 976
- US-A- 3 303 629

## Beschreibung

Die Erfindung betrifft eine Schlauchformvorrichtung in einer Schlauchbeutelmaschine nach dem Oberbegriff des Anspruchs 1, wie sie aus der DE 1 215 351 bekannt ist. Bei der bekannten Schlauchformvorrichtung weist die Längsnahtsiegeleinrichtung ein zwischen den Innenseiten der miteinander zu verbindenden Randbereiche der Packstoffbahn angeordnetes Heizband auf, welches mittels einer U-förmigen Trägerkonstruktion gespannt wird. Um insbesondere bei Produktionspausen ein Anhaften der Packstoffbahn an dem Heizband zu verhindern wird vorgeschlagen, die Heizleistung während der Produktionspause herabzusetzen. Ferner ist es aus der DE 1 215 351 weiterhin ebenfalls bekannt, ein Heizband während einer Betriebspause aus dem Bereich der Randbereiche der Packstoffbahn vollständig herauszuziehen, um das oben angesprochene Anhaften am Heizband zu verhindern.

Aufgabe der Erfindung ist es, eine Schlauchformvorrichtung in einer Schlauchbeutelmaschine derart weiterzubilden, dass bei kompaktem Aufbau der Längsnahtsiegeleinrichtung die Neigung bzw. Gefahr des Anhaftens des Packstoffbandes an der Längsnahtsiegeleinrichtung reduziert ist. Diese Aufgabe wird mit den kennzeichnenden Merkmalen des Anspruchs 1 gelöst. Insbesondere wird durch die Einbettung des elektrischen Widerstandsdrahtes in hitzebeständige Streifen mit niedrigem Reibwert erreicht, dass ein problemloser Vorzug des Packstoffbandes ermöglicht wird. Ferner wird durch die U-förmige Ausbildung des Widerstandsdrahtes ein kompakter Aufbau der Längsnahtsiegeleinrichtung erreicht, da durch die eng benachbarten Schenkeln des Widerstandsdrahtes eine gleichmäßige und hohe Wärmeabgabe ermöglicht wird. Vorteilhafte Weiterbildungen der erfindungsgemäßen Schlauchformvorrichtung in einer Schlauchbeutelmaschine sind in den Unteransprüchen angegeben.

### Vorteile der Erfindung

Die erfindungsgemäße Schlauchformvorrichtung mit den kennzeichnenden Merkmalen des Anspruchs 1 hat den Vorteil, daß bei direkter Übertragung der Wärme auf die Innenseite der zu verschweißenden Randbereiche des Packstoffbandes die Heizleistung des Heizkörpers gering und daher die Kontaktfläche relativ klein ist. Wird zusätzlich gemäß dem Merkmal des Anspruchs 2 auch die Außenseite der Randbereiche des Packstoffbandes beheizt, ergibt sich eine besonders kurze Baulänge der Längsnahtsiegeleinrichtung.

### Zeichnung

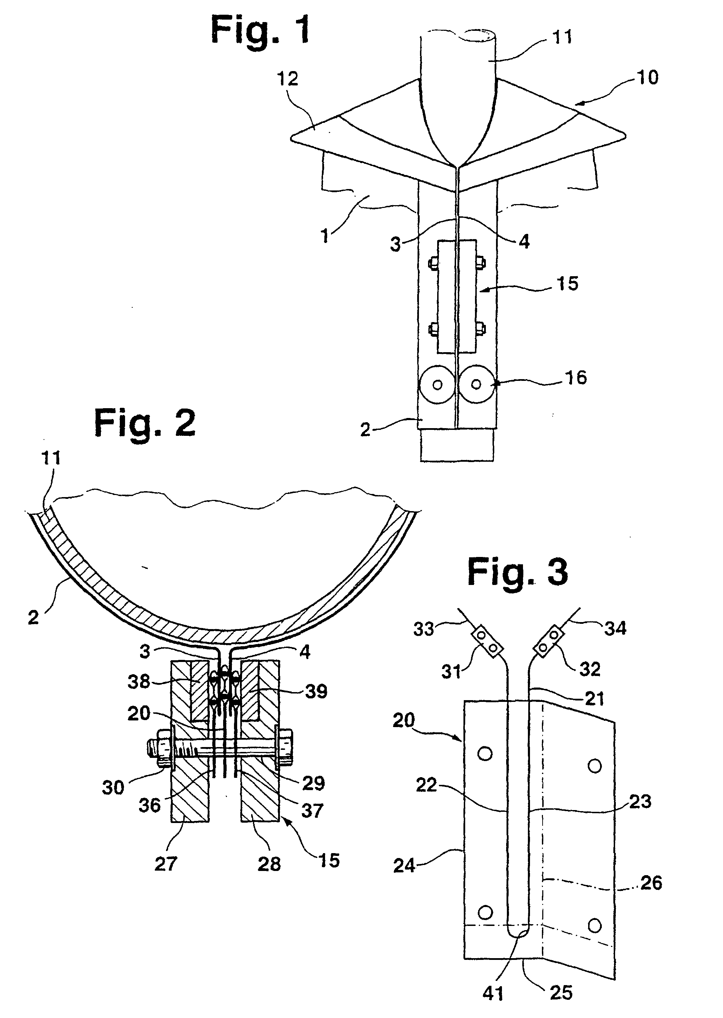

Ein Ausführungsbeispiel der Erfindung ist in der Zeichnung dargestellt und wird im folgenden näher beschrieben. Es zeigen Figur 1 eine Schlauchformvorrichtung in einer Schlauchbeutelmaschine vereinfacht in Vorderansicht, Figur 2 eine Heißsiegeleinrichtung der Schlauchformvorrichtung nach Figur 1 im Querschnitt und Figur 3 einen Heizkörper der Heißsiegeleinrichtung in Seitenansicht.

### Beschreibung des Ausführungsbeispiels

Eine Schlauchbeutelmaschine hat eine Formvorrichtung 10, in der ein zulaufendes, flaches Packstoffband 1 zu einem Schlauch 2 geformt und dessen beiden, vom Schlauch 2 abstehenden Randbereiche 3, 4 Innenseite gegen Innenseite gegeneinandergeführt und miteinander heißgesiegelt werden.

Zum Formen des Schlauches 2 dient ein Formrohr 11 und eine dieses mit einem Ringspalt umgebende Formschulter 12, über die das flache Packstoffband 1 gleitet und beim Einlauf in den Ringspalt um das Formrohr 11 zu dem Schlauch 2 geformt wird.

Die beiden gegeneinandergelegten Randbereiche 3, 4 des eine heißsiegelbare Innenschicht aufweisenden Packstoffbandes 1 werden beim Durchlaufen einer dem Formrohr 11 zugeordneten Längsnahtheißsiegeleinrichtung 15 auf Schmelztemperatur der Innenschicht erwärmt und anschließend von einem Preßrollenpaar 16 zusammengedrückt, so daß die beiden Innenschichten der Randbereiche 3, 4 im erhitzten Bereich miteinander verschmelzen oder zumindest eine feste Haftung eingehen.

Die Längsnahtsiegeleinrichtung 15 hat einen Heizkörper 20 in Form einer dünnen Lamelle, die zungenartig zwischen die beiden gegeneinandergeführten Randbereiche 3, 4 des Packstoffbandes 1 ragt. Der Heizkörper 20 weist einen U-förmig gebogenen elektrischen Widerstandsdraht 21 mit zwei eng benachbarten langgestreckten Schenkeln 22, 23 auf. Die beiden Schenkel 22, 23 sind in eine Hülle 24 eingebettet, die aus einem längsgefalteten Bogen 25 aus einem dünnen Gewebe aus einem hitzebeständigen, reibungsarmen Material, wie zum Beispiel Teflonglasseide, besteht. In dem gefalteten Boden 25 liegen die beiden Schenkel 22, 23 des Widerstandsdrahtes 21 nahe dem Falz 26, der in eingebautem Zustand des Heizkörpers 20 nahe und parallel zum Formrohr 11 verläuft. Die aufeinandergelegten Lagen der Hülle 24, die mittels eines temperaturfesten Klebers aneinander haften, sind zwischen zwei Tragleisten 27, 28 eingespannt, die mit Schrauben 29 und Muttern 30 zusammengehalten werden und mit denen die Längsnahtsiegeleinrichtung 15 montiert ist. Die beiden aus der Hülle 24 ragenden Enden des Widerstandsdrahtes 21 sind mittels Verbindungsklemmen 31, 32 mit Stromleitern 33, 34 verbunden, die zu einer Stromquelle führen. Vorzugsweise ist die nicht dargestellte Stromquelle ein Transformator mit einer Spannung von 4 bis 12 Volt und einer Stromstärke von 6 bis 12 Ampere. Beim Betrieb der Vorrichtung wird die elektrische Leistung so eingestellt und geregelt, daß die Innenseite der beiden Randbereiche 3, 4 des kontinuierlich vorgezogenen Schlauches 2 bzw. des Packstoffbandes 1 die Außenseite des lamellenartigen Heizkörpers 20 berühren, auf Schmelztemperatur erwärmt werden, bevor sie den Heizkörper 20 verlassen und von den Preßrollen 16 zusammengepreßt und abgekühlt werden, so daß eine feste Verschmelzung oder Haftung der Längsnaht entsteht.

Um die für eine hohe Ausbringung der Schlauchbeutelmaschine die erforderliche Erwärmung der Randbereiche 3, 4 des Packstoffbandes 1 zu beschleunigen, sind bei der Ausführung nach Figur 2 zusätzlich zwei gleichartige Heizkörper 36, 37 angeordnet, die die Außenseite der Randbereiche 3, 4 des Packstoffbandes 1 berühren. Diese beiden Heizkörper 36, 37 liegen zu beiden Seiten des ersten Heizkörpers 20, und sind zusammen mit diesem in den Tragleisten 27, 28 eingespannt. Ihre den Widerstandsdraht 21 deckenden Wandbereiche nahe dem Falz 26 liegen an einer elastischen Einlage 38, 39 in den Tragleisten 27, 28 an. Die zusätzlichen Heizkörper 36, 37 sind ähnlich wie der Haupt-Heizkörper 20 an einer regelbaren Stromquelle angeschlossen. Sie erwärmen die Randbereiche 3, 4 des Packstoffbandes 1 mit einer Leistung, die so eingestellt ist, daß in der Außenschicht der Randbereiche 3, 4 des Packstoffbandes eine Temperatur erreicht wird, so daß ein schnelles Erhitzen der Innenschicht gefördert wird.

Vorzugsweise sind die Heizkörper 20; 36, 37 in den Tragleisten 27, 28 so montiert, daß der bogenförmige Grund des Widerstandsdrahtes 21 der beiden außenanliegenden Heizkörper 36, 37 am Einlaufende und der bogenförmige Grund des Widerstandsdrahtes 21 des inneren Heizkörpers 20 am Auslauf der Längsnahtsiegeleinrichtung 15 liegen. Der bogenförmige Grund 41 des Widerstandsdrahtes 21 des inneren Heizkörpers 20 kann auch von der Hülle 24 unbedeckt sein, die in der Figur 3 strichpunktiert angedeutet ist.

## Patentansprüche

1. Schlauchformvorrichtung in einer Schlauchbeutelmaschine, mit einer Einrichtung, in der ein Packstoffband (1) mit einer Heißsiegelschicht auf seiner Innenseite zu einem Schlauch (2) geformt wird, wobei die Randbereiche (3, 4) des Packstoffbandes (1) Innenseite gegen Innenseite gelegt werden, mit einer Längsnahtheißsiegeleinrichtung (15) mit einem einen elektrischen Widerstandsdraht (21) aufweisenden Heizkörper (20), der die Randbereiche (3, 4) des kontinuierlich vorgezogenen Packstoffbandes (1) durch Berührung von der Innenseite der Randbereiche (3, 4) her erwärmt und mit einer Presseinrichtung (16), die die erwärmten Randbereiche (3, 4) zusammenpresst und abkühlt, **dadurch gekennzeichnet, dass** der Widerstandsdraht (21) des Heizkörpers (20) in U-Form mit eng benachbarten Schenkeln (22, 23) zwischen zwei dünnen, hitzebeständigen Streifen (24) mit niedrigem Reibwert angeordnet ist, und dass der Heizkörper (20) der Schlauchformvorrichtung (10) so zugeordnet ist, dass die miteinander zu versiegelnden Randbereiche (3, 4) des Packstoffbandes (1) mit ihrer Innenseite gegen den zwischen diese ragenden flachen Heizkörper (20) während des Vorzugs des Packstoffbandes (1) gleitend berühren.

2. Schlauchformvorrichtung nach Anspruch 1, **dadurch gekennzeichnet, daß** beidseitig des Heizkörpers (20) je ein ähnlich gestalteter Heizkörper (36, 37) angeordnet ist und daß diese Heizkörper (36, 37) die Außenseite je eines Bandbereichs (3, 4) des Packstoffbandes (1) berühren.

3. Schlauchformvorrichtung nach Anspruch 1 oder 2, **dadurch gekennzeichnet, daß** der Widerstandsdraht (21) des Heizkörpers (20; 36, 37) in einem längsgefalteten Bogen aus einem temperaturfesten dünnen Gewebe eingebettet ist.

4. Schlauchformvorrichtung nach einem der Ansprüche 1 bis 3, **dadurch gekennzeichnet, daß** der Heizkörper (20; 36, 37) zwischen zwei Tragleisten (27, 28) eingespannt ist.

## Claims

1. Tube-forming device in a bagmaking machine, having a device in which a strip of packaging material (1) with a heat-sealed layer on its inner side is formed into a tube (2), the edge regions (3, 4) of the strip of packaging material (1) being placed inner side against inner side, having a longitudinal seam heat-sealing device (15) with a heating element (20) that has an electrical resistance wire (21), which heats the edge regions (3, 4) of the strip of packaging material (1), which is pulled forward continuously, by means of contact from the inner side of the edge regions (3, 4), and having a pressing device (16), which presses the heated edge regions (3, 4) together and cools them, **characterized in that** the resistance wire (21) of the heating element (20) is arranged in a U shape with closely adjacent legs (22, 23) between two thin, heat-resistant strips (24) with a low friction, and **in that** the heating element (20) of the tube-forming device (10) is assigned in such a way that the edge regions (3, 4) of the strip of packaging material (1) to be sealed to each other makes sliding contact with their inner side against the flat heating element (20) projecting between the said inner sides, as the strip of packaging material (1) is pulled forward.

2. Tube-forming device according to Claim 1,
**characterized in that** on both sides of the heating element (20), a similarly configured heating element (36, 37) is arranged in each case, and **in that** these heating elements (36, 37) make contact with the outer side of an edge region (3, 4) in each case of the strip of packaging material (1).

3. Tube-forming device according to Claim 1 or 2, **characterized in that** the resistance wire (21) of the heating element (20; 36, 37) is embedded in a longitudinally folded sheet of a temperature-resistant, thin fabric.

4. Tube-forming device according to one of Claims 1 to 3, **characterized in that** the heating element (20; 36, 37) is clamped in between two carrier strips (27, 28).

## Revendications

1. Dispositif de formage d'un tube d'une machine d'emballage tubulaire comportant une installation dans laquelle un film d'emballage (1) est mis en forme avec une couche de scellement à chaud sur le côté intérieur pour donner un tube (2), les zones de bord (3, 4) du film d'emballage (1) étant appliquées côté intérieur contre côté intérieur,
une installation de scellement (15) réalisant une soudure longitudinale, avec un organe chauffant (20) muni d'un fil résistant électrique (21) qui chauffe les zones de bord (3, 4) du film d'emballage (1) passant en continu, par contact du côté intérieur des zones de bord (3, 4) en les comprimant avec une installation de compression (16) qui comprime les zones de bord chauffées (3, 4) puis les refroidit,
**caractérisé en ce que**
le fil résistant (21) de l'organe chauffant (20) est installé en forme d'un U dont les branches (22, 23) sont étroitement rapprochées, entre deux bandes minces réfractaires (24) à faible coefficient de frottement, et
l'organe chauffant (20) du dispositif de formage de tube (10) est disposé pour que les zones de bord (3, 4) à sceller l'une avec l'autre du film d'emballage (1), viennent par leur face intérieure, en contact avec l'organe chauffant (20), plat, passant entre ceux-ci, pendant que le film d'emballage (1) est tiré.

2. Dispositif selon la revendication 1,
**caractérisé en ce que**
sur les deux faces de l'organe chauffant (20) on a chaque fois un organe chauffant (36, 37) de même forme et les organes chauffants (36, 37) touchent le côté extérieur de chaque zone de bande (3, 4) du film d'emballage (1).

3. Dispositif selon l'une quelconque des revendications 1 ou 2,
**caractérisé en ce que**
le fil résistant (21) de l'organe chauffant (20 ; 36, 37) est intégré dans une feuille pliée longitudinalement en un tissu mince réfractaire.

4. Dispositif selon l'une quelconque des revendications 1 à 3,
**caractérisé en ce que**
l'organe chauffant (20 ; 36, 37) est serré entre deux longerons de support (27, 28).
